# EUROPÄISCHE PATENTSCHRIFT

(11) **EP 0 611 256 B1**
(45) Veröffentlichungstag und Bekanntmachung des Hinweises auf die Patenterteilung: **29.12.1997**
(21) Anmeldenummer: 94810058.1
(22) Anmeldetag: 04.02.1994
(51) Int. Cl.: B65G 17/06

(54) **Transportsystem mit Transportketten**
Transporting system with transport chairs
Système de transport avec chaînes de transport

(30) Priorität: 11.02.1993 CH 422/93
(43) Veröffentlichungstag der Anmeldung: 17.08.1994
(73) Patentinhaber: Ferag AG, CH-8340 Hinwil (CH)
(72) Erfinder: Weber, Bruno, CH-8572 Berg (CH)
(74) Vertreter: Frei, Alexandra Sarah

(56) Entgegenhaltungen:
- EP-A- 0 303 457
- DE-B- 1 280 734
- GB-A- 984 757

## Beschreibung

Die Erfindung betrifft ein Transportsystem gemäss dem Oberbegriff des unabhängigen Patentanspruchs 1. Dieses Transportsystem weist Transportketten auf, insbesondere Transportketten, deren Kettenglieder Halteelemente, Klemmelemente oder ähnliche Elemente zum Transport von einzelnen zu transportierenden Einheiten, beispielsweise von Druckprodukten tragen.

Transportketten sind ein bekanntes Transportmittel, insbesondere auf dem Gebiete der Weiterverarbeitung von Druckprodukten, wo sie beispielsweise versehen mit Greifern zum Transport einzelner Druckprodukte zur Anwendung kommen. Mit derartigen Transportketten mit Greifern, wie sie beispielsweise in den Patentschriften CH-A-644816 (US-A-4381056), CH-A-592562 (US-A-3955667) oder CH-A-588647 (US-A-4294345) derselben Anmelderin beschrieben sind, können, wenn sie mit entsprechend gegeneinander beweglichen Gliedern ausgestattet und in entsprechenden Kanälen geführt sind, Transportstrecken in allen Richtungen (drei Freiheitsgrade) und insbesondere mit einer grossen Vielfalt von Richtungsänderungen realisiert werden.

Sind nun die Greifer gross, die zu transportierenden Einheiten schwer und/oder muss die Kette aus irgendwelchen Gründen seitlich oder sonstwie asymmetrisch metrisch von den zu transportierenden Einheiten angeordnet werden, können die nicht in Transportrichtung auf die Kette wirkenden Kräfte zu gross werden. In solchen Fällen werden, wie beispielsweise in der Patentanmeldung CH-01730/92-8 (US-Appl. no.-890102) derselben Anmelderin beschrieben, parallel zur Kettenbahn Schienen oder ähnliche Stützmittel angeordnet, auf denen die Greifer beispielsweise mittels Stützrollen gestützt und geführt sind. Auch mit derartigen Anordnungen können Transportstrecken mit drei Freiheitsgraden realisiert werden. Sie eignen sich gut über mehr oder weniger horizontale Transportstrecken, helfen aber auf sehr steilen oder gar senkrechten Transportstrecken nichts, sodass sie also doch eine Beschränkung bezüglich des Transportstreckenverlaufs bedeuten. Die Greifer können in solchen Fällen auch zwischen zwei äquidistant verlaufenden Ketten angeordnet sein, was aber eine Beschränkung des Transportstreckenverlaufes auf zwei Freiheitsgrade bedeutet, das heisst eine Beschränkung der Transportstrecke auf eine Ebene senkrecht zur Fläche, in der die beiden Ketten verlaufen.

Um diesem Nachteil abzuhelfen, sind in den Publikationen DE-1280734 und GB-987757 Anordnungen mit zwei Ketten beschrieben worden, deren Glieder mit gelenkigen Verbindungen miteinander verbunden sind, wobei diese Verbindungen mittels eines Führungsmittels derart geführt werden, dass sie je nach Streckenverlauf mehr oder weniger gefaltet sind, das heisst in Förderrichtung eine mehr oder weniger grosse Ausdehnung aufweisen.

Es ist nun die Aufgabe der Erfindung, ein Transportsystem mit Transportketten zu schaffen, das auf eine möglichst gleiche Vielfalt von Transportstrecken anwendbar ist wie die eingangs genannte Transportkette mit Greifern, das heisst insbesondere auf Transportstrecken mit drei Freiheitsgraden, mit dem aber auch schwerere und insbesondere nicht mittig fassbare, zu transportierende Einheiten problemlos transportiert werden können.

Diese Aufgabe wird gelöst durch das Transportsystem mit Transportketten gemäss dem unabhängigen Patentanspruch 1.

Gemäss Erfindung weist das Transportsystem eine Mehrzahl von Transportketten auf, die mindestens über einen Teil der Transportstrecke äquidistant, das heisst mit gleichbleibendem Abstand voneinander, verlaufen, beispielsweise ein äquidistant verlaufendes Kettenpaar. Die Transportketten bestehen, wie die eingangs genannten Transportketten aus gegeneinander beweglichen Kettengliedern, wobei beispielsweise je ein Kettenglied der einen mit je einem Kettenglied der anderen Ketten fest verbunden ist, beispielsweise durch entsprechende Stangen, an denen die Halte- oder Klemmelemente befestigt sind, oder durch die Halte- oder Klemmelemente selbst. Damit nun derartig verbundene Ketten, deren Glieder sich synchron bewegen müssen, wie in der Aufgabenstellung gefordert auch anwendbar sind über Transportstreckenteile, die derart gekrümmt sind, dass die einzelnen Kettenbahnen verschiedene Krümmungsradien und dadurch verschiedene Längen aufweisen, ist erfindungsgemäss die Länge der Kettenglieder von wenigstens einem Teil der Ketten oder der Abstand zwischen den Kettengliedern durch entsprechende Steuermittel einstellbar. Das heisst mit anderen Worten, alle oder wenigstens ein Teil der Ketten sind derart ausgestaltet, dass die Abstände in Transportrichtung zwischen je zwei identischen Punkten auf zwei aufeinanderfolgenden Kettengliedern (Gliederabstand) verlänger- und/oder verkürzbar sind.

Eine derartige Variierbarkeit des Gliederabstandes wird erfindungsgemäss realisiert dadurch, dass eine oder mehrere Ketten des Transportsystems Glieder aufweisen, die in einem Grundzustand mit einem festen Gliederabstand (Grundabstand) miteinander verbunden sind, die aber für Krümmungen mit ungleichen Kettenbahnlängen voneinander gelöst sind, derart, dass sich der Gliederabstand entsprechend der Transportstreckenkrümmung einstellen kann. Die Kette ist über gradlinige Transportstreckenteile oder über Transportstreckenteile, die nur senkrecht zur durch die Ketten aufgespannten Fläche gekrümmt sind, in ihrem Grundzustand und wird für andere Streckenteile durch entsprechende Steuermittel in den Zustand mit gelösten Gliedern überführt. Eine Kette mit voneinander lösbaren und wieder verbindbaren Gliedern muss zusammen mit einer Kette mit konstant verbundenen Gliedern angewendet werden. Die Abstände der voneinander gelösten Kettenglieder werden passiv eingestellt durch Verbindungselemente zwischen den Gliedern der beiden Ketten. Die Kette mit den lösbaren Gliedern ist nur über diejenigen Transportstreckenteile antreibbar, in denen sie sich im Grundzustand befindet, sodass über die Gliederverbindung Zug- und/oder Schubkräfte übertragen werden können. Im gelösten Zustand wirken die Kettenglieder in derselben Weise wie die im Zusammenhang mit der Patentanmeldung CH-01730/92-8 (US-890102) bereits erwähnten Stützrollen. Es ist somit vorteilhaft, die Kette beispielsweise auf steilen, aber geradlinig verlaufenden Transportstreckenteilen im Grundzustand zu führen und, wenn notwendig, auch anzutreiben.

Es soll nun anhand der folgenden Figuren, in denen einige beispielhafte Ausführungsformen der erfindungsgemässen Transportsysteme und von Teilen davon dargestellt sind, deren Funktion und Aufbau beschrieben werden. Dabei zeigen:
- **Figur 1**: eine schematische Draufsicht auf einen Ausschnitt aus einer Transportstrecke einer beispielhaften Ausführungsform des erfindungsgemässen Transportsystems mit einem Kettenpaar, von dem die eine Kette voneinander lösbare Kettenglieder aufweist;
- **Figur 2**: eine schematische Draufsicht für eine weitere beispielhafte Ausführungsform wie in Figur 1;
- **Figuren 3a und 3b**: Detaildarstellungen von einem Kettenglied für eine Ausführungsform des erfindungsgemässen Transportsystems gemäss Figur 1 (Fig 3a: Blickrichtung senkrecht zur Transportrichtung, Fig 3b: Blickrichtung parallel zur Transportrichtung);
- **Figur 4**: zwei durch ein Kupplungselement verbundene Kettenglieder gemäss Figuren 3 (Blickrichtung senkrecht zur Transportrichtung und senkrecht zur Blickrichtung der Figur 3a);
- **Figur 5**: eine weitere Ausführungsform eines Kupplungselementes.

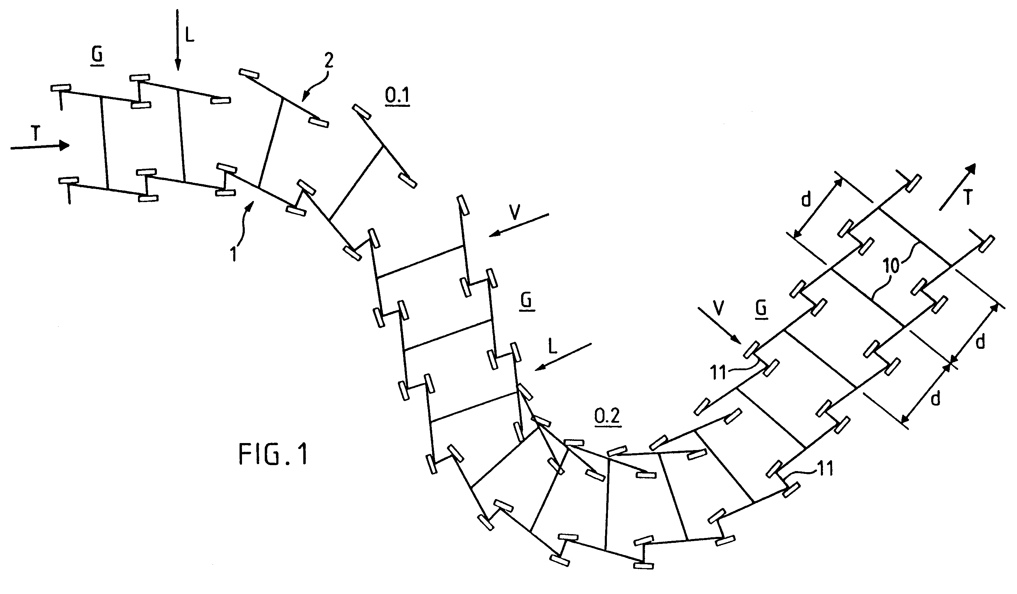

**Figur 1** zeigt als schematische Draufsicht einen Ausschnitt aus einer Transportstrecke einer beispielhaften Ausführungsform des erfindungsgemässen Transportsystems mit einem Kettenpaar, wobei je ein Kettenglied der einen Kette mit einem Kettenglied der anderen Kette durch ein Verbindungselement 10 verbunden ist. Eine erste Kette 1 hat konstant miteinander verbundene Kettenglieder (Gliederabstand = Grundabstand d) und ist angetrieben oder antreibbar. Eine zweite Kette 2 hat in einem Grundzustand über die mit G bezeichneten Transportstreckenteile (beide Kettenbahnen mit gleichen Krümmungsradien) ebenfalls miteinander verbundene Kettenglieder mit Grundabstand d, über die mit O bezeichneten Transportstreckenteile (verschiedene Krümmungsradien der beiden Kettenbahnen) aber voneinander gelöste Kettenglieder. Die Kettenglieder der zweiten Kette 2 sind derart ausgestaltet, dass der Gliederabstand gegenüber dem Grundabstand d nicht nur vergrössert (Transportstreckenteil O.1), sondern auch verkleinert werden kann (Transportstreckenteil O.2).

Die Glieder der zweiten Kette weisen beispielsweise wie dargestellt in Transportrichtung voneinander beabstandete Laufrollen auf, die in einer entsprechenden Kettenführung (nicht dargestellt) abrollen. Dabei sind die beiden Laufrollen eines Kettengliedes je auf der einen und auf der anderen Seite von einer mittleren, die Kettenbahn bezeichnenden Linie beabstandet, derart, dass die in Transportrichtung vordere Laufrolle eines folgenden Kettengliedes zur Verkürzung der Gliederabstände vor der hinteren Laufrolle des vorangehenden Gliedes abrollen kann.

Die Kettenglieder sind mit Kupplungselementen 11 versehen, mit deren Hilfe sie voneinander lösbar und miteinander verbindbar sind. Für die Lösung der Kupplungen sind an den Stellen L entsprechende kupplungslösende Steuermittel vorgesehen. Für die Wiederverbindung der Glieder sind an den Stellen V kupplungsschliessende Steuermittel vorgesehen. Dies gilt für eine Transportrichtung wie sie durch den Pfeil T angegeben ist. Bei umgekehrter Transportrichtung sind die kupplungslösenden und die kupplungsschliessenden Steuermittel zu vertauschen.

Die Glieder der ersten Kette können denen der zweiten Kette weitgehend entsprechen, ohne dass die Kettenglieder der ersten Kette mit lösbaren Kupplungselementen versehen sein müssen.

Da mit der zweiten Kette 2 nur in ihrem Grundzustand (Transportstreckenteile G) Kräfte in Transportrichtung übertragen werden können, kann sie nur über derartige Strecken angetrieben werden. Die voneinander gelösten Kettenglieder auf den Transportstreckenteilen O können lediglich als Führungsstützen wirken.

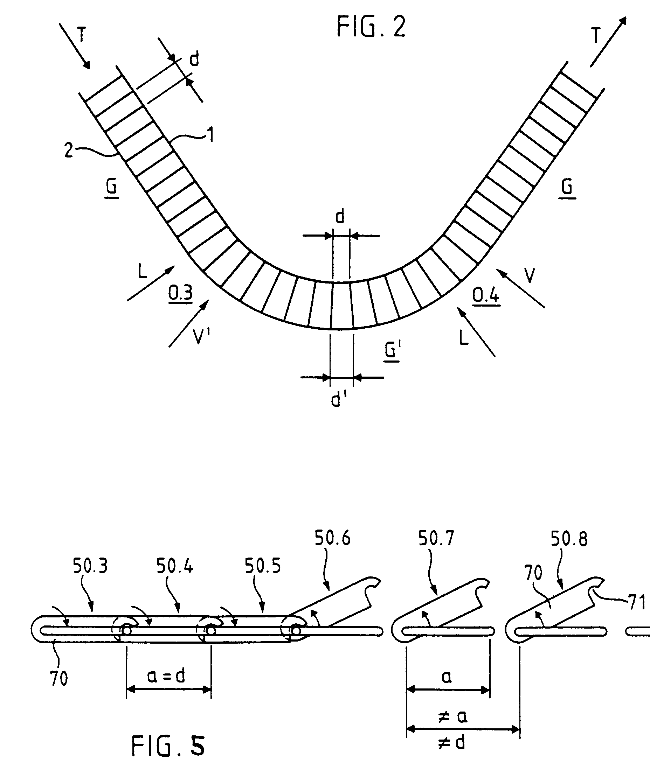

**Figur 2** zeigt nun ein Transportsystem wie dasjenige der Figur 1, wobei aber die Kupplungselemente der Kettenglieder der zweiten Kette 2 derart ausgestaltet sind, dass die Kette neben einem Grundzustand G, in dem die Glieder mit Grundabstand d (gleich wie der Gliederabstand der ersten Kette) miteinander verbunden sind, mindestens einen weiteren Zustand G' haben kann, in dem die Glieder mit einem anderen, an einen bestimmten Krümmungsradius angepassten Gliederabstand d' miteinander verbunden sind. Eine derartige Kette wird dann am Eingang (in Transportrichtung T gesehen) einer entsprechenden Krümmung durch Steuermittel L aus dem Grundzustand G in einen Zustand O (O.3 und O.4) mit gelösten Gliedern gebracht, in dem sie solange verbleibt, bis ein konstanter Krümmungsradius erreicht ist. Dann wird durch ein entsprechendes Steuermittel V' ein Zustand G' mit verbundenen Gliedern (Gliederabstand d' entsprechend dem Krümmungsradius) erstellt, in dem die Kettenglieder durch die Krümmung laufen. Am Übergang der Krümmung zu einem beispielsweise gradlinigen Transportstreckenteil oder einer weiteren Krümmung mit anderem Krümmungsradius sind wiederum Steuermittel L und V vorgesehen.

Die Figuren 1 und 2 zeigen in einer ebenen Fläche (Papierebene) verlaufende Transportstrecken. Es kann sich aber dabei auch um eine Grundrissdarstellung handeln, das heisst dass die Transportstrecke beliebige Höhen unter oder über der Papierebene einnehmen kann. Selbstverständlich sind auch Ausführungen im Sinne der Figuren 1 oder 2 möglich, die mehr als zwei Ketten aufweisen. Beispielsweise kann auf der anderen Seite der ersten Kette 1 eine weitere zweite Kette vorgesehen sein, wobei die drei Ketten mindestens über einen Teil der Transportstrecke äquidistant verlaufen. Das heisst: der Abstand zwischen der ersten Kette und der ersten weiteren Kette ist über diesen Transportstreckenteil immer gleich, der Abstand zwischen der ersten Kette und der zweiten weiteren Kette ist auch immer gleich, wobei aber die beiden Abstände voneinander verschieden sein können.

Die Figuren 1 und 2 zeigen Ketten mit Kettengliedern, die durch ein Kupplungselement miteinander verbindbar und voneinander lösbar sind. Es ist aber auch denkbar, dass die Kettenglieder durch in ihrer Länge in Transportrichtung stufenlos einstellbare Gliederverbindungen (beispielsweise teleskopartige Verbindungen) aufweisen, die die Kettenglieder in einem immer verbundenen Zustand halten und dass die Kupplungselemente nicht eigentlich die Funktion einer Verbindung der Kettenglieder haben, sondern die Funktion der Fixierung der Länge der Gliederverbindung.

Es versteht sich, dass die Ketten insbesondere über nicht gradlinige Transportstreckenteile durch entsprechende Führungen geführt sein müssen. Die einzelnen Ketten eines erfindungsgemässen Transportsystemes brauchen nicht über die Gesamtheit der Transportstrecke äquidistant zueinander zu verlaufen. Es ist auch vorstellbar, dass sie über bestimmte Teile der Transportstrecke voneinander unabhängige, individuelle Kettenbahnen aufweisen. Damit dies möglich wird, müssen die Verbindungen 10 entweder fehlen oder entsprechend lösbar eingerichtet sein. Des weiteren ist es auch möglich, die einzelnen Ketten gegeneinander zu verdrehen oder das ganze System zu verdrehen, indem die Ketten spiralförmig umeinander herum geführt werden.

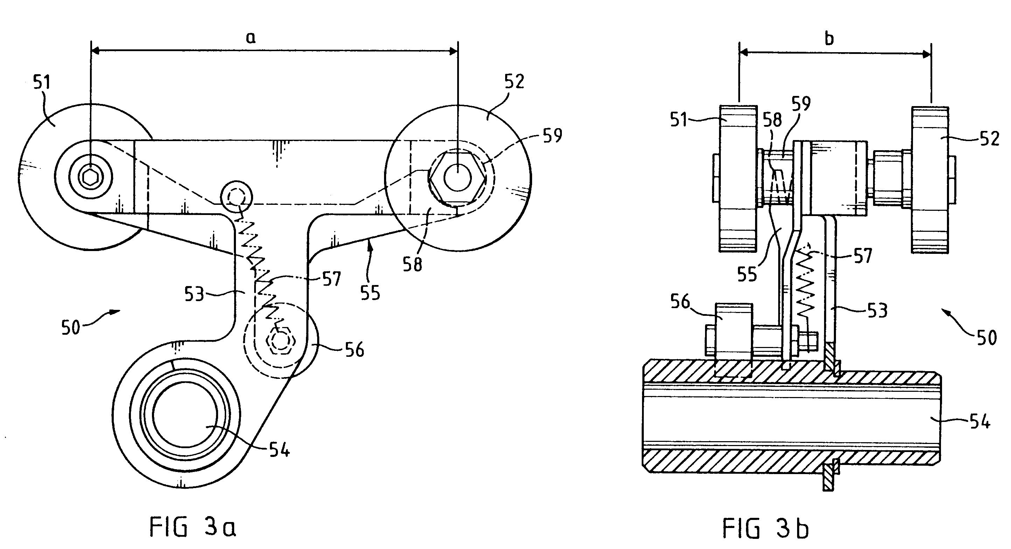

**Figuren 3a und 3b** zeigen nun im Detail eine beispielhafte Ausführungsform eines Kettengliedes 50 für die Kette 1 des erfindungsgemässen Transportsystems gemäss Figur 1. Figur 3a zeigt das Kettenglied mit Blickrichtung senkrecht zur Transportrichtung. Figur 3b zeigt dasselbe Kettenglied mit Blickrichtung parallel zur Transportrichtung. Wie bereits im Zusammenhang mit der Figur 1 erwähnt, weist das Kettenglied zwei Laufrollen 51 und 52 auf, die bei der Bewegung der Kette in Transportrichtung in einer nicht dargestellten Führung abrollen und zwar voneinander beabstandet nicht nur in Transportrichtung (Abstand a) sondern auch senkrecht dazu (Abstand b). Die beiden Laufrollen 51 und 52 sind drehbar an einem Kettengliedkörper 53 angeordnet, an dem ebenfalls, beispielsweise drehbar in einem entsprechenden Lager 54 eine nicht dargestellte Klammer oder sonstiges Halteelement befestigt ist. Ferner weist das Kettenglied 50 ein Kupplungselement 55 auf, das um die Achse der einen Laufrolle 51 schwenkbar angeordnet ist und eine Steuerrolle 56 trägt. Je nach Abstand dieser Steuerrolle 56 von den Laufrollen reicht ein Kupplungsarm 58 des Kupplungselementes 55 in den Bereich der Wellen der Laufrollen oder ist von diesem Bereich beabstandet. Der Kupplungsarm 58 weist eine einer derartigen Welle 59 entsprechende Einformung auf und kann mit der Laufrollenwelle eines benachbarten Kettengliedes derart in Interaktion treten, dass dieses eine definierte Position gegenüber dem betrachteten Kettenglied einnimmt (Grundzustand der Kette). Bei einer Ausführungsform wie sie in den Figuren 3a und 3b dargestellt ist, gilt dies aber nur dann, wenn die Kette auf Druck belastet ist, also gestossen betrieben wird.

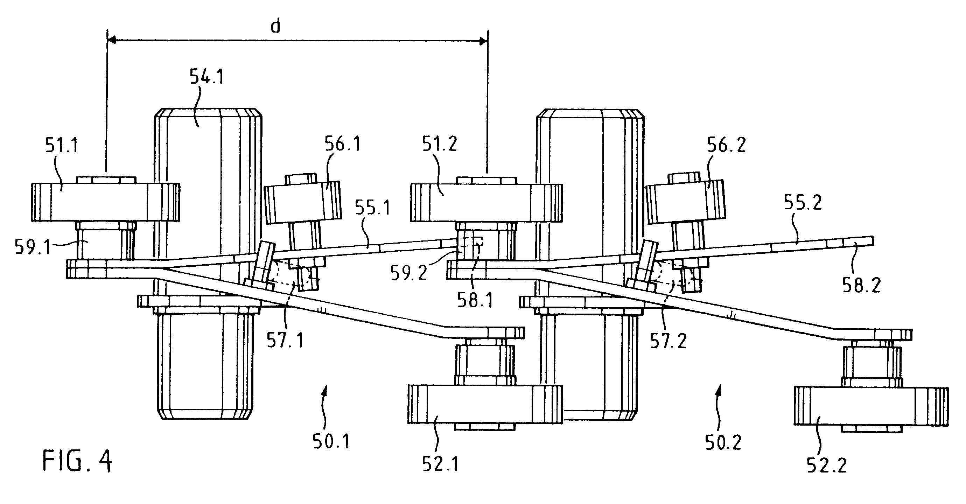

**Figur 4** zeigt zwei Kettenglieder 50.1 und 50.2, wie sie im Zusammenhang mit den Figuren 3a und 3b bereits beschrieben wurden, mit Blickrichtung senkrecht zur Transportrichtung und senkrecht zur Blickrichtung der Figur 3a. Die einzelnen Elemente der beiden Kettenglieder sind mit den gleichen Bezugsziffern bezeichnet wie in den Figuren 3a und 3b und tragen zusätzlich ein .1 oder .2 für jedes Kettenglied. Die beiden dargestellten Kettenglieder stellen den Grundzustand einer entsprechenden Kette dar, das heisst, sie sind miteinander durch das Kupplungselement 55.1 mit einem bestimmten Gliederabstand (Grundabstand d) "verbunden" (nur für Stossbetrieb). In dieser Ausführungsform entspricht dieser Grundabstand dem Abstand a zwischen den Laufrollen eines Kettengliedes in Transportrichtung, was aber in keiner Weise zwingend ist. Wird das Kupplungselement 55.1 abgeschwenkt, können die beiden Kettenglieder näher aneinander geschoben werden, das heisst der Gliederabstand kann kleiner werden als der Grundabstand. Ohne eine stossend auf die Kette wirkende Kraft kann bei der dargestellten Ausführungsform der Gliederabstand, auch ohne das Kupplungselement zu verschwenken, der Gliederabstand auch vergrössert werden.

Die Steuerrolle 56 wird mit einer entsprechenden, nicht dargestellten Steuerkulisse gesteuert. Damit bei Grundzustand der Kette (aufgeschwenkter Kupplungsarm) und Stossbetrieb keine Steuerkulisse notwendig ist, besitzt das Kupplungselement 55 zusätzlich ein Rückstellelement, beispielsweise eine durch strichpunktierte Linien 57 dargestellte Feder, durch die es in diesem Zustand gehalten wird, wenn ein benachbartes Kettenglied in Abstand a anwesend ist.

**Figur 5** zeigt für eine gleiche Ausführungsform von Kettengliedern, wie sie in den Figuren 3 und 4 dargestellt sind, Kupplungselemente, die einen definierten Grundzustand der Kette sowohl bei Druck- als auch Zugsbelastung ermöglichen. Die Figur zeigt von den Kettengliedern 50.3 bis 50.8 nur die Laufrollenwellen, die schematisch mit einer Linie verbunden sind. Im Grundzustand (Grundabstand d gleich wie Laufrollenabstand a) liegen je eine Welle von zwei benachbarten Gliedern auf derselben Achslinie. Das Kupplungselement 70 ist ein einfacher Schwenkhebel, der schwenkbar um die Achse der einen Laufrolle eines Kettengliedes angeordnet ist, wie dies bereits im Zusammenhang mit den Figuren 3 und 4 beschrieben worden ist. Dieser Schwenkhebel weist eine einer Laufrollenwelle entsprechende Einformung 71 auf und zwar in einem Abstand von der Schwenkachse, der dem Grundabstand d entspricht. Diese Einformung hakt sich beim Abschwenken des Kupplungselementes in die Laufrollenwelle des benachbarten Kettengliedes ein und verbindet die zwei Kettenglieder derart, dass sie, unabhängig davon, ob die Kette auf Zug oder Druck belastet ist, einen definierten Abstand d voneinander haben. Wird das Kupplungselement durch ein entsprechendes Steuermittel aufgeschwenkt sind die Kettenglieder voneinander gelöst und ihr gegenseitiger Abstand beliebig einstellbar.

Die in der Figur 5 dargestellten Kettenglieder 50.3 bis 50.6 sind durch abgeschwenkte Kupplungselemente miteinander verbunden und stellen den Grundzustand der Kette dar. Die Kettenglieder 50.7 und 50.8 sind voneinander gelöst und weisen einen durch die Transportstrecke gegebenen Abstand voneinander auf, der grösser ist als der Grundabstand d. In diesem Zustand sind aber auch Gliederabstände möglich, die kleiner, gleich oder grösser sind als d.

Das in der Figur 5 dargestellte Kupplungselement kann in gleicher Weise wie das in den Figuren 3a und 3b dargestellte Kupplungselement mit Hilfe einer nicht dargestellten Steuerrolle und entsprechenden Steuerkulissen gesteuert werden.

Soll die Kette neben einem Grundzustand weitere Zustände mit verbundenen Gliedern aber vom Grundabstand verschiedenen Gliederabständen einnehmen können (vergleiche Figur 2), können am Kupplungselement den verschiedenen, vorgegebenen Gliederabständen entsprechende Einformungen vorgesehen sein.

## Patentansprüche

1. Transportsystem mit Transportketten, die eine Vielzahl von Kettengliedern aufweisen, welches System mindestens zwei Transportketten aufweist, die mindestens über einen Teil der Transportstrecke auf äquidistanten Kettenbahnen synchron bewegbar sind dadurch, dass auf Transportstreckenteilen, auf denen die äquidistanten Kettenbahnen verschiedene Krümmungsradien aufweisen, die Kettengtieder mindestens eines Teils der Transportketten derart ausgestaltet sind, dass die Abstände zwischen je zwei identischen Punkten auf je zwei einander folgenden Kettengliedern an das Verhältnis der Krümmungsradien der äquidistanten Kettenbahnen anpassbar ist, **dadurch gekennzeichnet**, dass das System eine erste Transportkette (1) aufweist, deren Glieder miteinander verbunden sind und einen festen Gliederabstand (d) aufweisen, und dass es mindestens eine weitere Transportkette (2) aufweist, deren Kettenglieder durch Steuermittel (L, V) in einen voneinander gelösten und einen miteinander verbundenen Zustand bringbar sind, wobei je ein Glied der ersten Transportkette (1) mit je einem Glied jeder weiteren Transportkette (2) durch ein Verbindungselement (10) verbunden ist und wobei die Glieder der weiteren Transportketten (2) im verbundenen Zustand denselben Gliederabstand (d) aufweisen wie die Glieder der ersten Kette und im gelösten Zustand einen Gliederabstand der grösser, kleiner oder gleich dem Gliederabstand (d) des verbundenen Zustandes ist.

2. Transportsystem nach Anspruch 1, **dadurch gekennzeichnet**, dass es Transportstreckenteile mit äquidistanten Kettenbahnen und Transporstreckenteile mit individuell verlaufenden Kettenbahnen aufweist.

3. Transportsystem nach Anspruch 1 oder 2, **dadurch gekennzeichnet**, dass die Kettenglieder der weiteren Transportketten (2) derart ausgestaltet sind, dass die Kette zusätzlich zu einem Zustand (G) mit verbundenen Kettengliedern und mit einem Gliederabstand (d), der gleich gross ist wie der Gliederabstand der ersten Transportkette (1), weitere derartige Zustände (G') haben kann, in denen der Gliederabstand (d') grösser oder kleiner ist als der Gliederabstand der ersten Transportkette.

4. Transportsystem nach einem der Ansprüche 1 bis 3, **dadurch gekennzeichnet**, dass die Kettenglieder mindestens der weiteren Transportketten zwei Laufrollen (51, 52) aufweisen, die in Transportrichtung und senkrecht dazu voneinander beabstandet sind, und dass sie Kupplungselemente (55) aufweisen, die derart beweglich angeordnet sind, dass sie durch entsprechende Steuermittel in den Bereich der Laufrollen benachbarter Kettenglieder bringbar sind.

5. Transportsystem nach Anspruch 4, **dadurch gekennzeichnet**, dass die Kupplungselemente (55) schwenkbar um die Achse der einen Laufrolle (51) angeordnet sind und an einem Kupplungsarm (58) eine Einformung aufweisen, die mit einer Laufrollehwelle (59) in Verbindung bringbar ist.

6. Transportsystem nach Anspruch 4 oder 5, **dadurch gekennzeichnet**, dass die Kupplungselemente (55) Steuerrollen (56) aufweisen, die wenigstens auf Teilen der Transportstrecke auf Steuerkulissen abrollen.

7. Transportsystem nach Anspruch 5, **dadurch gekennzeichnet**, dass der Gliederabstand (d) der ersten Transportkette gleich gross ist wie der Abstand (a) in Transportrichtung zwischen den Laufrollen jedes Kettengliedes der weiteren Transportketten.

8. Transportkette, bestehend aus einer Mehrzahl von Kettengliedern für ein Transportsystem gemäss einem der Ansprüche 1 bis 7, **dadurch gekennzeichnet**, dass jedes Kettenglied ein steuerbar bewegliches Kupplungselement aufweist, mit dessen Hilfe es in eine auflösbare Verbindung mit einem benachbarten Kettenglied bringbar ist.

9. Transportkette nach Anspruch 8, **dadurch gekennzeichnet**, dass jedes Kettenglied je zwei Laufrollen (51, 52) aufweist, die in Transportrichtung und senkrecht dazu voneinander beabstandet sind, und dass die Kettenglieder Kupplungselemente (55, 70) aufweisen, die mit einer Laufrollenwelle (59) in Verbindung bringbar sind.

10. Transportkette nach Anspruch 9, **dadurch gekennzeichnet**, dass das Kupplungselement (55, 70) schwenkbar um die Achse der einen Laufrolle des Kettengliedes angeordnet ist und eine Einformung (71) aufweist, die mit einer der Laufrollenwellen eines benachbarten Kettengliedes in Verbindung bringbar ist.

11. Transportkette nach Anspruch 10, **dadurch gekennzeichnet**, dass das Kupplungselement mehrere mit einer Laufrollenwelle in Verbindung bringbare Einformungen aufweist.

## Claims

1. Conveying system with conveyor chains having a plurality of chain links, said system having at least two conveyor chains, which over at least part of the conveying path are synchronously movable on equidistant chain paths in that on the chain path parts on which the equidistant chain paths have different radii of curvature, the links of at least one part of the conveyor chains are so designed that the spacings between in each case two identical points on in each case two following links is adaptable to the ratio of the radii of curvature of the equidistant chain paths, characterized in that the system has a first conveyor chain (1), whose links are interconnected and have a fixed link spacing (d), and that it has at least one further conveyor chain (2), whose links can be brought by control means (L, V) into a mutually released and a mutually connected state, in each case one link of the first conveyor chain (1) being connected by in each case one link of each further conveyor chain (2) by a connecting element (10) and in which the links of the further conveyor chains (2) in the connected state have the same link spacing (d) as the links of the first chain and in the released state have a link spacing which is larger, smaller or the same as the link spacing (d) of the connected state.

2. Conveying system according to claim 1, characterized in that it has conveying path parts with equidistant chain paths and conveying path parts with individually running chain paths.

3. Conveying system according to claim 1 or 2, characterized in that the links of the further conveyor chains (2) are so designed that the chain, in addition to a state (G) with connected links and with a link spacing (d), which is the same as the link spacing of the first conveyor chain (1), can have further such states (G') in which the link spacing (d') is larger or smaller than the link spacing of the first conveyor chain.

4. Conveying system according to one of the claims 1 to 3, characterized in that the links of at least the further conveyor chains have two rollers (51, 52), which are spaced from one another in the conveying direction and perpendicular thereto and that they have coupling elements (55) movably arranged in such a way that they can be brought by corresponding control means into the vicinity of rollers of adjacent chain links.

5. Conveying system according to claim 4, characterized in that the coupling elements (55) are arranged pivotably about the axis of one roller (51) and on one coupling arm (58) is provided an indentation, which can be connected to a roller spindle (59).

6. Conveying system according to claim 4 or 5, characterized in that the coupling elements (55) have control rolls (56), which roll on control links on at least parts of the conveying path.

7. Conveying system according to claim 5, characterized in that the link spacing (d) of the first conveyor chain is the same as the spacing (a) in the conveying direction between the rollers of each link of the further conveyor chains.

8. Conveyor chain, comprising a plurality of links for a conveying system according to one of the claims 1 to 7, characterized in that each link has a controllably movable coupling element with the aid of which it can be brought into a releasable connection with a neighbouring link.

9. Conveyor chain according to claim 8, characterized in that each link has two rollers (51, 52), which in the conveying direction and perpendicular thereto are spaced from one another and that the links have coupling elements (55, 70), which are connectable with a roller spindle (59).

10. Conveyor chain according to claim 9, characterized in that the coupling element (55, 70) is pivotable about the axis of one roller of the link and has an indentation (71), which is connectable with one of the roller spindles of an adjacent link.

11. Conveyor chain according to claim 10, characterized in that the coupling element has several indentations connectable with a roller spindle.

## Revendications

1. Système de transport comportant des chaînes de convoyeur qui présentent plusieurs maillons de chaîne, ledit système présentant au moins deux chaînes de convoyeur qui peuvent se déplacer de manière synchrone au moins sur une partie du parcours de transport sur des bandes transporteuses à chaîne équidistantes, par le fait que sur les parties des parcours de transport sur lesquelles les bandes transporteuses à chaîne équidistantes présentent des gradients différents de courbure, les maillons de chaîne d'au moins une partie des chaînes de convoyeur sont conçus de telle sorte que les distances entre respectivement deux points identiques sur respectivement deux maillons de chaîne successifs peuvent être ajustées au rapport des rayons de courbure des bandes transporteuses à chaîne équidistantes, caractérisé en ce que le système présente une première chaîne de convoyeur (1) dont les maillons sont assemblés les uns avec les autres et présentent entre eux une distance fixe (d) et en ce qu'il présente au moins une autre chaîne de convoyeur (2) dont les maillons de chaîne peuvent être amenés par des moyens de commande (L, V) dans un état où ils sont séparés l'un de l'autre et dans un état où ils sont assemblés l'un avec l'autre, un maillon de la première chaîne de convoyeur (1) étant respectivement assemblé avec respectivement un maillon de toute autre chaîne de convoyeur (2) par un élément d'assemblage (10) et les maillons des autres chaînes de convoyeur (2) présentant dans l'état assemblé, la même distance (d) entre maillons que les maillons de la première chaîne et à l'état séparé, une distance entre maillons qui est supérieure, inférieure ou égale à la distance (d) entre maillons de l'état assemblé.

2. Système de transport selon la revendication 1, caractérisé en ce qu'il présente des parties de parcours de transport avec des bandes transporteuses à chaîne équidistantes et des parties de parcours de transport avec des bandes transporteuses à chaîne individuelles.

3. Système de transport selon la revendication 1 ou la revendication 2, caractérisé en ce que les maillons des autres chaînes de convoyeur (2) sont conçus de telle sorte que la chaîne peut avoir en plus d'un état (G) avec les maillons de la chaîne assemblés et une distance (d) entre maillons identique à la distance entre maillons de la première chaîne de convoyeur (1), d'autres états (G') dans lesquels la distance entre maillons (d') est supérieure ou inférieure à la distance entre maillons de la première chaîne de convoyeur.

4. Système de transport selon l'une quelconque des revendications 1 à 3, caractérisé en ce que les maillons de chaîne au moins des autres chaînes de convoyeur présentent deux galets de roulement (51, 52) qui sont écartés l'un de l'autre dans le sens du transport et verticalement et en ce qu'ils présentent des éléments d'accouplement (55) qui sont disposés de manière mobile de telle sorte qu'ils sont amenés par des moyens de contrôle correspondants dans la zone des galets de roulement des maillons adjacents de la chaîne.

5. Système de transport selon la revendication 4, caractérisé en ce que les éléments d'accouplement (55) sont disposés de manière à pouvoir pivoter autour de l'axe de l'un des galets de roulement (51) et présentent sur un bras d'accouplement (58), un moulage qui peut être assemblé avec un arbre (59) des galets de roulement.

6. Système de transport selon la revendication 4 ou la revendication 5, caractérisé en ce que les éléments d'accouplement (55) présentent des galets de commande (56) qui roulent sur des coulisses de commande, au moins sur des parties du parcours de transport.

7. Système de transport selon la revendication 5, caractérisé en ce que la distance (d) entre maillons de la première chaîne de convoyeur est identique à la distance (a) - dans le sens de transport - entre les galets de roulement de chaque maillon des autres chaînes de convoyeur.

8. Chaîne de convoyeur comportant plusieurs maillons de chaîne pour un système de transport selon l'une quelconque des revendications 1 à 7, caractérisé en ce que chaque maillon de chaîne présente un élément d'accouplement mobile, réglable et à l'aide duquel il peut être assemblé de manière amovible avec un maillon de chaîne adjacent.

9. Chaîne de convoyeur selon la revendication 8, caractérisé en ce que chaque maillon de chaîne présente respectivement deux galets de roulement (51, 52) qui sont écartés l'un de l'autre dans le sens du transport et verticalement et en ce que les maillons de chaîne présentent des éléments d'accouplement (55, 70) qui peuvent être assemblés avec un arbre de galets de roulement (59).

10. Chaîne de convoyeur selon la revendication 9, caractérisé en ce que l'élément d'accouplement (55, 70) est disposé de manière à pouvoir pivoter autour de l'axe de l'un des galets de roulement du maillon de chaîne et présente un moulage (71) qui peut être assemblé avec l'un des arbres des galets de roulement d'un maillon de chaîne adjacent.

11. Chaîne de convoyeur selon la revendication 10, caractérisé en ce que l'élément d'accouplement présente plusieurs moulages pouvant être assemblés avec un arbre de galets de roulement.
